# EUROPEAN PATENT APPLICATION

(11) **EP 4 451 105 A1**
(43) Date of publication of application: **23.10.2024**
(21) Application number: 23203992.5
(22) Date of filing: 17.10.2023
(51) Int. Cl.: G06F 3/12, H04N 1/00, G06K 15/00

(54) **INSPECTION LEVEL SETTING SYSTEM, PROGRAM, AND INSPECTION LEVEL SETTING METHOD**

(30) Priority: 20.04.2023 JP 2023069522
(71) Applicant: FUJIFILM Business Innovation Corp., Minato-ku Tokyo (JP)
(72) Inventor: NAKAYAMA, Hiroyoshi, Yokohama-shi, Kanagawa (JP); NOGUCHI, Daisuke, Yokohama-shi, Kanagawa (JP); YAMAGUCHI, Megumi, Yokohama-shi, Kanagawa (JP); KAWABE, Masatake, Yokohama-shi, Kanagawa (JP)
(74) Representative: Kurig, Thomas

(57) **Abstract**

An inspection level setting system includes a processor configured to display an inspection result of inspecting whether an output material output from an output apparatus is a good product in an inspection device in which an inspection level serving as a reference for determining whether the output material is the good product is set, receive, from a user, an input of a determination result as to whether the output material inspected by the inspection device is the good product, and change, in a case where the inspection result by the inspection device does not match the determination result of the user, the inspection level set in the inspection device to be brought close to a determination criterion of the user.

## Description

### BACKGROUND OF THE INVENTION

### (i) Field of the Invention

The present disclosure relates to an inspection level setting system, a program, and an inspection level setting method.

### (ii) Description of Related Art

An image processing system is described in JP2021-070168A in which the optimum inspection level and inspection item are easily set without depending on skill of a user even in a case where a print job identical to a received print job is not registered in a database.

### SUMMARY OF THE INVENTION

For example, an inspection device may be used in which an output material output from an output apparatus, such as a printing apparatus, is inspected to determine whether the output material is a good product or a defective product. In such an inspection device, an inspection level serving as a reference for determining whether the output material is the good product or the defective product is set, and the output material is inspected based on the set inspection level.

However, there is a problem that the output material determined to be the good product by the user is the defective product in the inspection device in a case where the inspection level is too strict, or conversely, the output material determined to be the defective product by the user is the good product in the inspection device in a case where the inspection level is too loose.

An object of the present invention is to provide an inspection level setting system, a program, and an inspection level setting method capable of setting an inspection level in which a determination criterion of a user is reflected in an inspection device.

According to a first aspect of the present disclosure, there is provided an inspection level setting system including a processor configured to display an inspection result of inspecting whether an output material output from an output apparatus is a good product in an inspection device in which an inspection level serving as a reference for determining whether the output material is the good product is set, receive, from a user, an input of a determination result as to whether the output material inspected by the inspection device is the good product, and change, in a case where the inspection result by the inspection device does not match the determination result of the user, the inspection level set in the inspection device to be brought close to a determination criterion of the user.

According to a second aspect of the present disclosure, there is provided the inspection level setting system according to the first aspect, in which the processor may be configured to set, in a case where the inspection result by the inspection device is the good product and the input from the user is not the good product, the inspection level to be stricter than a current inspection level, and set, in a case where the inspection result by the inspection device is not the good product and the input from the user is the good product, the inspection level to be looser than the current inspection level.

According to a third aspect of the present disclosure, there is provided the inspection level setting system according to the second aspect, in which the processor may be configured to change the inspection level in a case where a mismatch satisfying a set condition occurs, regarding the mismatch between the inspection result by the inspection device and an input result from the user.

According to a fourth aspect of the present disclosure, there is provided the inspection level setting system according to the third aspect, in which the set condition may be that a ratio of the number of times in which the mismatch occurs in the set number of output materials is equal to or larger than a set ratio.

According to a fifth aspect of the present disclosure, there is provided the inspection level setting system according to the third aspect, in which the set condition may be that the number of times in which the mismatch occurs in the set number of output materials is equal to or larger than the set number of times.

According to a sixth aspect of the present disclosure, there is provided the inspection level setting system according to any one of the first to fifth aspects, in which the inspection level may be set for each output content.

According to a seventh aspect of the present disclosure, there is provided the inspection level setting system according to any one of the first to fifth aspects, in which the inspection level may be set for each requester requesting an output.

According to an eighth aspect of the present disclosure, there is provided the inspection level setting system according to the seventh aspect, in which the inspection level may be further set for each output content.

According to a ninth aspect of the present disclosure, there is provided a program that causes a computer to execute a process including displaying an inspection result of inspecting whether an output material output from an output apparatus is a good product in an inspection device in which an inspection level serving as a reference for determining whether the output material is the good product is set, receiving, from a user, an input of a determination result as to whether the output material inspected by the inspection device is the good product, and changing, in a case where the inspection result by the inspection device does not match the determination result of the user, the inspection level set in the inspection device to be brought close to a determination criterion of the user.

According to a tenth aspect of the present disclosure, there is provided an inspection level setting method including displaying an inspection result of inspecting whether an output material output from an output apparatus is a good product in an inspection device in which an inspection level serving as a reference for determining whether the output material is the good product is set, receiving, from a user, an input of a determination result as to whether the output material inspected by the inspection device is the good product, and changing, in a case where the inspection result by the inspection device does not match the determination result of the user, the inspection level set in the inspection device to be brought close to a determination criterion of the user.

With the inspection level setting system of the first aspect of the present invention, the inspection level in which the determination criterion of the user is reflected in the inspection device can be set.

With the inspection level setting system of the second aspect of the present invention, the inspection level can be brought close to the determination criterion of the user.

With the inspection level setting system of the third aspect of the present invention, the inspection level can be maintained in a case where the set condition is not satisfied.

With the inspection level setting system of the fourth aspect of the present invention, the inspection level can be maintained in a case where the ratio of the number of times in which the mismatch occurs in the set number of output materials is less than the set ratio.

With the inspection level setting system of the fifth aspect of the present invention, the inspection level can be maintained in a case where the number of times in which the mismatch occurs in the set number of output materials is less than the set number of times.

With the inspection level setting system of the sixth aspect of the present invention, different inspection levels can be set in a case where the output contents are different.

With the inspection level setting system of the seventh aspect of the present invention, different inspection levels can be set in a case where requesters requesting the output are different.

With the inspection level setting system of the eighth aspect of the present invention, different inspection levels can be set in a case where the output contents are different.

With the program of the ninth aspect of the present invention, the inspection level in which the determination criterion of the user is reflected in the inspection device can be set.

With the inspection level setting method according to the tenth aspect of the present invention, the inspection level in which the determination criterion of the user is reflected in the inspection device can be set.

### BRIEF DESCRIPTION OF THE DRAWINGS

Exemplary embodiment(s) of the present invention will be described in detail based on the following figures, wherein:
Fig. 1 is a diagram showing a system configuration of a printing system according to an exemplary embodiment of the present disclosure;
Fig. 2 is a block diagram showing a hardware configuration of a management server;
Fig. 3 is a block diagram showing a functional configuration of the management server;
Fig. 4 is a block diagram showing a hardware configuration of a user terminal;
Fig. 5 is a block diagram showing a hardware configuration of an operation terminal;
Fig. 6 is a diagram showing an example of a management screen;
Fig. 7 is a diagram showing an example of the management screen;
Fig. 8 is a diagram showing an example of the management screen;
Fig. 9 is a diagram showing an example of the management screen;
Fig. 10 is a diagram showing an example of an inspection level management table;
Fig. 11 is a diagram showing an example of the inspection level management table;
Fig. 12 is a diagram showing an example of the inspection level management table;
Fig. 13 is a flowchart showing a flow of processing of acquiring an inspection result in an inspection device;
Fig. 14 is a first half part of a flowchart showing a flow of processing of changing an inspection level of the inspection device by a management server;
Fig. 15 is a second half part of the flowchart showing the flow of the processing of changing the inspection level of the inspection device by the management server; and
Fig. 16 is a diagram showing an example in which a scanned image is divided into a plurality of regions and the inspection level is set for each region.

### DETAILED DESCRIPTION OF THE INVENTION

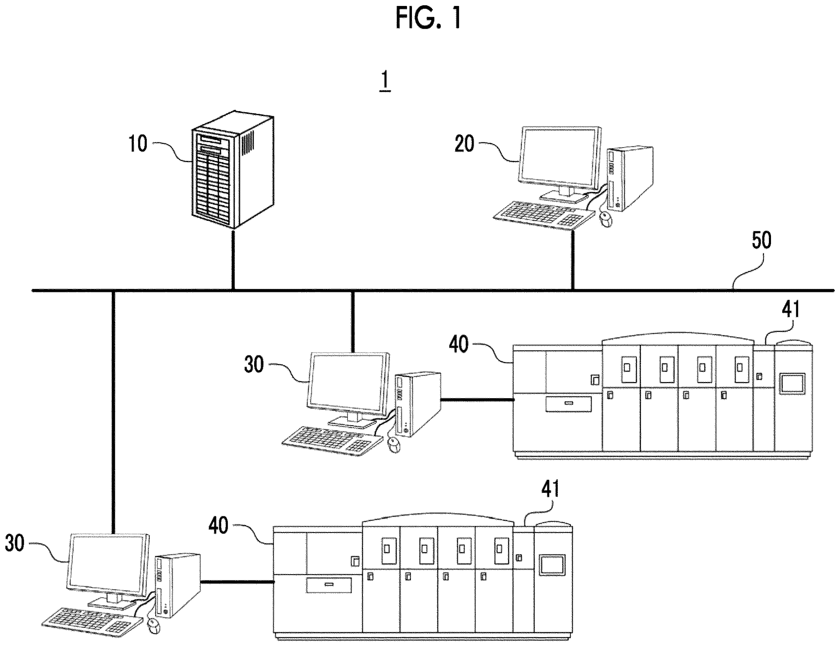

Hereinafter, exemplary embodiments of the present invention will be described in detail with reference to the accompanying drawings. Fig. 1 is a diagram showing a system configuration of a printing system 1 according to an exemplary embodiment of the present invention.

As shown in Fig. 1, the printing system 1 includes, as an example, a management server 10, a user terminal 20, an operation terminal 30, and an image forming apparatus 40 including an inspection device 41. The management server 10, the user terminal 20, and the operation terminal 30 are connected to each other via a network 50.

The printing system 1 of the present exemplary embodiment is a system capable of setting and managing an inspection level of the inspection device 41 included in the image forming apparatus 40 with the management server 10.

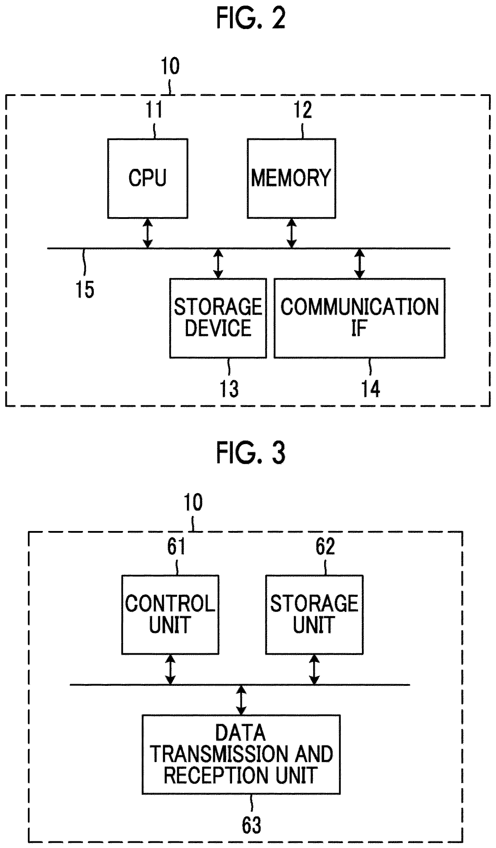

The management server 10 is an example of an inspection level setting system in the technique of the present disclosure, and is an example of a server that manages the inspection level of the inspection device 41 included in the image forming apparatus 40. Fig. 2 is a block diagram showing a hardware configuration of the management server 10.

As shown in Fig. 2, the management server 10 has a central processing unit (CPU) 11, a memory 12, a storage device 13 such as a hard disk drive, a communication interface (hereinafter abbreviated as IF) 14 that transmits and receives data to and from an external device or the like, and a control bus 15. The CPU 11, the memory 12, the storage device 13, and the communication IF 14 are connected to each other via the control bus 15.

The CPU 11 is a processor that executes predetermined processing based on a control program stored in the memory 12 or the storage device 13 to control the operation of the management server 10. In the present exemplary embodiment, the description has been made in which the CPU 11 reads out and executes the control program stored in the memory 12 or the storage device 13, but the present disclosure is not limited thereto. The control program may be provided in a form of being recorded on a computer-readable recording medium. For example, the program may be provided in a form of being recorded on optical disks such as a compact disc (CD)-read only memory (ROM) and a digital versatile disc (DVD)-ROM or in a form of being recorded on semiconductor memories such as a universal serial bus (USB) memory and a memory card. Further, the control program may be acquired from the external apparatus via a communication line connected to the communication IF 14.

Fig. 3 is a block diagram showing a functional configuration of the management server 10 realized by executing the above control program. As shown in Fig. 3, the management server 10 of the present exemplary embodiment has a control unit 61, a storage unit 62, and a data transmission and reception unit 63.

The control unit 61 performs control processing of the overall operation of the management server 10, management of the inspection level of the inspection device 41, and the like. The storage unit 62 stores the control program and also information necessary for the operation of the management server 10. The data transmission and reception unit 63 transmits and receives data to and from the external device.

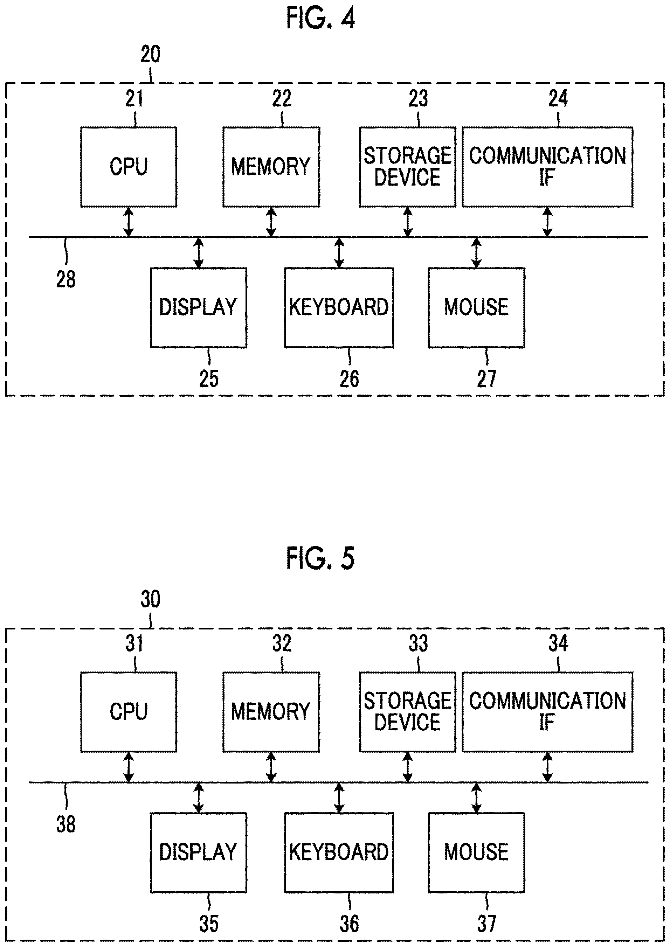

The user terminal 20 is a terminal that accesses the management server 10 to perform inputting of a determination result as to whether an output material inspected by the inspection device 41 included in the image forming apparatus 40 is a good product, or the like. Fig. 4 is a block diagram showing a hardware configuration of the user terminal 20.

As shown in Fig. 4, the user terminal 20 has a CPU 21, a memory 22, a storage device 23 such as a hard disk drive, a communication IF 24 that transmits and receives data to and from the external device or the like, a display 25 such as a liquid crystal, a keyboard 26, a mouse 27, and a control bus 28.

The CPU 21, the memory 22, the storage device 23, the communication IF 24, the display 25, the keyboard 26, and the mouse 27 are connected to each other via the control bus 28.

The CPU 21, the memory 22, the storage device 23, and the communication IF 24 are equivalent to the CPU 11, the memory 12, the storage device 13, and the communication IF 14 of the management server 10 and thus, will not be described. The display 25 is a display device that displays various pieces of information. The keyboard 26 and the mouse 27 are input devices that receive input from the user.

The operation terminal 30 is a terminal that performs setting and operation of the image forming apparatus 40, including the setting and operation of the inspection level of the inspection device 41 included in the image forming apparatus 40. Fig. 5 is a block diagram showing a hardware configuration of the operation terminal 30.

As shown in Fig. 5, the operation terminal 30 has a CPU 31, a memory 32, a storage device 33 such as a hard disk drive, a communication IF 34 that transmits and receives data to and from the external device or the like, a display 35, a keyboard 36, a mouse 37, and a control bus 38.

The CPU 31, the memory 32, the storage device 33, the communication IF 34, the display 35, the keyboard 36, and the mouse 37 are connected to each other via the control bus 38. Since a detailed configuration of the operation terminal 30 is the same as the configuration of the user terminal 20, the description thereof will be omitted.

The image forming apparatus 40 is an example of an output apparatus according to the technique of the present disclosure, and is an apparatus that prints data and outputs the data as the output material based on a print job subjected to an instruction input from the user terminal 20, the operation terminal 30, or the like. The image forming apparatus 40 includes the inspection device 41 that inspects whether the output material is the good product. The inspection device 41 is connected to the management server 10 via the operation terminal 30 connected to the image forming apparatus 40.

The inspection level serving as a reference for determining whether the output material is the good product is set in the inspection device 41. The inspection device 41 scans the output material of the image forming apparatus 40 and extracts abnormalities such as scratches and/or stains in a scanned image by image recognition to determine whether the output material is the good product based on a set inspection level.

Here, in a case where the inspection level set in the inspection device 41 is too strict, the output material determined to be the good product by the user is a defective product in the inspection device 41. On the contrary, in a case where the inspection level is too loose, the output material determined to be the defective product by the user is the good product in the inspection device 41.

Therefore, in the printing system 1 of the present exemplary embodiment, the management server 10 sets the inspection level in which a determination criterion of the user is reflected in the inspection device 41, and the control unit 61 of the management server 10 displays, in the inspection device 41 in which the inspection level serving as the reference for determining whether the output material is the good product is set, an inspection result of inspecting whether the output material output from the image forming apparatus 40 is the good product, receives, from the user, the input of the determination result of whether the output material inspected by the inspection device 41 is the good product, and changes, in a case where the inspection result by the inspection device 41 and the determination result of the user do not match, the inspection level set in the inspection device 41 to be brought close to the determination criterion of the user.

The control unit 61 may set the inspection level to be stricter than a current inspection level in a case where the inspection result by the inspection device 41 is the good product and the input from the user is not the good product, and may set the inspection level to be looser than the current inspection level in a case where the inspection result by the inspection device 41 is not the good product and the input from the user is the good product.

In this case, regarding the mismatch between the inspection result by the inspection device 41 and the input result from the user, the control unit 61 may change the inspection level in a case where a mismatch satisfying a set condition occurs.

Here, the set condition may be "a ratio of the number of times in which the mismatch occurs in the set number of output materials is equal to or larger than a set ratio", or "the number of times in which the mismatch occurs in the set number of output materials is equal to or larger than the set number of times".

Further, the inspection level may be set for each output content, set for each requester requesting the output, or set for each requester requesting the output and for each output content.

In the following, processing of changing the inspection level of the inspection device 41 in the printing system 1 of the present exemplary embodiment will be described in detail.

In the present exemplary embodiment, as an example, the inspection device 41 included in the image forming apparatus 40 outputs a result of "good product" or "defective product" as the inspection result for the output material. Further, the management server 10 receives from the user the input of the determination result of "good product" or "defective product" for the output material inspected by the inspection device 41. Further, the inspection level is set to 5 levels from an inspection level 1 in which the criterion for determining whether the product is the good product is the loosest to an inspection level 5 in which the criterion for determining whether the product is the good product is the strictest.

First, in a case where the print job is executed in the image forming apparatus 40 and a printed medium is output as the output material, the inspection device 41 scans the output material of the image forming apparatus 40 page by page.

Next, the inspection device 41 extracts abnormalities such as scratches and/or stains in the scanned image for each page by image recognition to determine whether the output material is the good product for each page based on the set inspection level.

Regarding the inspection level in the inspection device 41, the inspection level having an initial value is set at the time of shipment of the image forming apparatus 40, and a predetermined inspection level can be set by an operator via the operation terminal 30 connected to the image forming apparatus 40. Alternatively, the inspection level can be set based on the instruction input from the management server 10.

Next, the inspection device 41 transmits the information on the inspection result in association with the execution of the print job to the management server 10 together with information on the print job, information on the inspection level set at the time of the inspection, and the like.

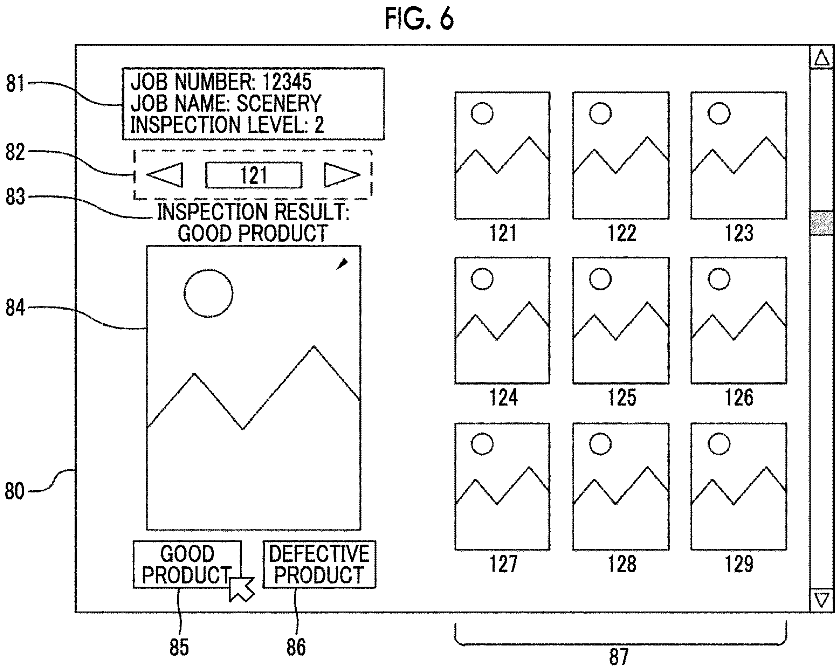

After acquiring the information such as the inspection result from the inspection device 41, the control unit 61 of the management server 10 causes the display 25 of the user terminal 20 to display the information on the inspection result for the output material by the inspection device 41 as a management screen 80. Fig. 6 is a diagram showing an example of the management screen 80 displayed on the user terminal 20 by the management server 10.

The management screen 80 includes a job information display unit 81, a page information display unit 82, an inspection result display unit 83, an enlarged image display unit 84, a "good product" input button 85, a "defective product" input button 86, and a thumbnail display unit 87.

The job information display unit 81 is a region in which detailed information about a job being displayed, such as a job number of the job being displayed, a job name of the job being displayed, and the inspection level set for the job being displayed, is displayed.

The page information display unit 82 includes a selection button for selecting a page to be displayed as the inspection result, and a page number display unit that displays a page number of the selected page.

The inspection result display unit 83 is a region in which the inspection result of the page selected in the page information display unit 82 is displayed.

The enlarged image display unit 84 is a region in which an enlarged image of the scanned image of the page selected in the page information display unit 82.

The "good product" input button 85 and the "defective product" input button 86 are buttons for receiving, from the user, the input of the determination result of "good product" or "defective product" for the page selected in the page information display unit 82.

The thumbnail display unit 87 is a region in which thumbnail images of scanned images of all pages inspected by the inspection device 41 are displayed. In a case where the thumbnail images of the scanned images of all the pages cannot be displayed on one screen, the thumbnail images of the scanned images of all the pages are displayed by scrolling.

For example, in the example shown in Fig. 6, the job number is "12345", the job name is "scenery", the inspection level is "2", and the inspection result (good product) of the scanned image on an 121th page is displayed.

The user checks the enlarged image of the scanned image on the 121th page displayed on the enlarged image display unit 84, and inputs the determination result of "good product" or "defective product" for the output material on the 121th page by using the "good product" input button 85 or the "defective product" input button 86.

In a case where the inspection result by the inspection device 41 and the determination result of the user do not match, the control unit 61 changes the inspection level set in the inspection device 41 to be brought close to the determination criterion of the user.

In the present exemplary embodiment, as an example, the control unit 61 sets the inspection level to one step stricter than the current inspection level in a case where the inspection result by the inspection device 41 is "good product" and the input from the user is not "good product", and sets the inspection level to one step looser than the current inspection level in a case where the inspection result by the inspection device 41 is not "good product" and the input from the user is "good product".

For example, as shown in Fig. 6, in a case where the output material to be considered as "good product" by the inspection device 41 is determined to be "good product" by the user, the control unit 61 does not change the inspection level of the inspection device 41 from the current inspection level 2.

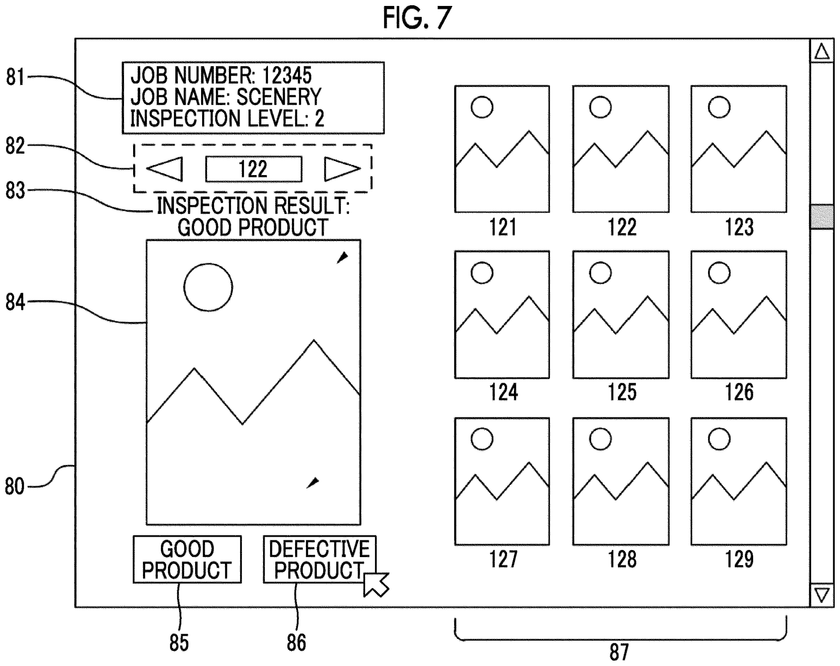

Further, as shown in Fig. 7, in a case where the output material to be considered as "good product" by the inspection device 41 is determined to be "defective product" by the user, the control unit 61 changes the inspection level to an inspection level 3, which is one step stricter than the current inspection level 2.

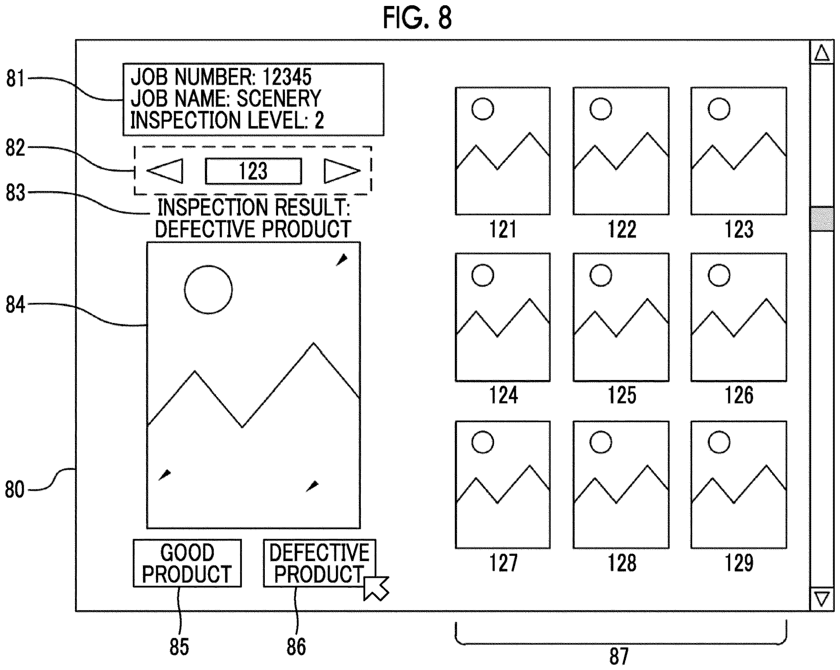

Further, as shown in Fig. 8, in a case where the output material to be considered as "defective product" by the inspection device 41 is determined to be "defective product" by the user, the control unit 61 does not change the inspection level from the current inspection level 2.

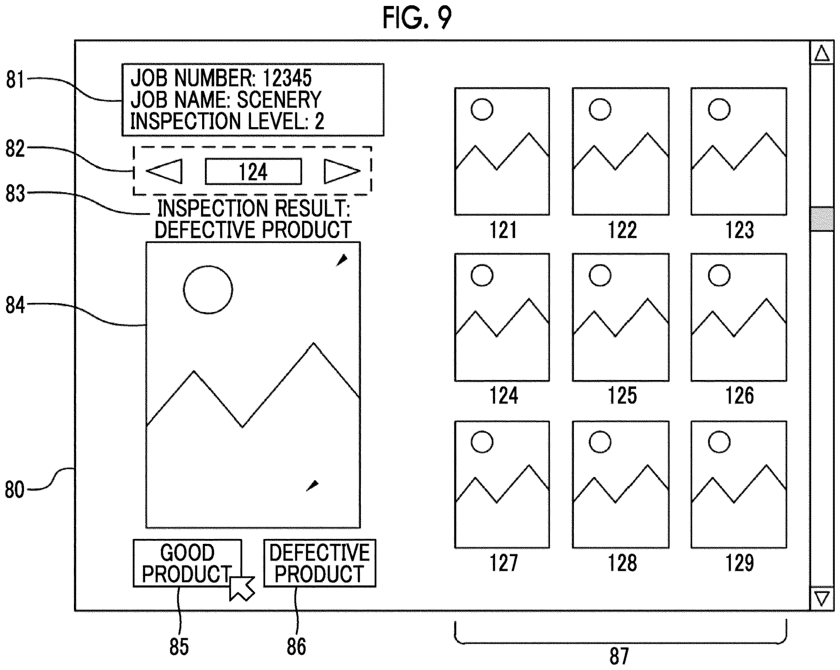

Further, as shown in Fig. 9, in a case where the output material to be considered as "defective product" by the inspection device 41 is determined to be "good product" by the user, the control unit 61 changes the inspection level to the inspection level 1, which is one step looser than the current inspection level 2.

However, in this example, regarding the mismatch between the inspection result by the inspection device 41 and the input result from the user, the control unit 61 changes the inspection level in a case where the mismatch satisfying the set condition occurs.

Here, the "set condition" may be "a ratio of the number of times in which the mismatch occurs in the set number of output materials is equal to or larger than a set ratio", or "the number of times in which the mismatch occurs in the set number of output materials is equal to or larger than the set number of times".

Further, the "set number of output materials" may be all the number of pages inspected by the inspection device 41 in the job being displayed, or may be a predetermined number of pages. Further, the "set number of output materials" may be the number of pages with the inspection result of "good product" or the number of pages with the inspection result of "defective product" among all the number of pages inspected by the inspection device 41 in the job being displayed. Further, the "set number of output materials" may be the predetermined number of pages with the inspection result of "good product" or the predetermined number of pages with the inspection result of "defective product".

As a specific example for description, for example, all the number of pages inspected by the inspection device 41 corresponding to one print job is set to 150, and the number of pages, among all the number of pages, with the inspection result of "good product" is set to 120 and the number of pages with the inspection result of "defective product" is set to 30.

For both cases of a case where the inspection level is changed for the mismatch in a case where the output material with the inspection result of the inspection device 41 of "good product" is determined to be "defective product" by the user and a case where the inspection level is changed for the mismatch in a case where the output material with the inspection result of the inspection device 41 of "defective product" is determined to be "good product" by the user, the "set number of output materials" may be 150, which is all the number of pages, or may be, for example, 100 as the predetermined number of pages.

Further, regarding a case where the inspection level is changed for the mismatch in a case where the output material with the inspection result of the inspection device 41 of "good product" is determined to be "defective product" by the user, the "set number of output materials" may be 120, which is the number of pages with the inspection result of "good product" or may be, for example, 10 as the predetermined number of pages.

Further, regarding a case where the inspection level is changed for the mismatch in a case where the output material with the inspection result of the inspection device 41 of "defective product" is determined to be "good product" by the user, the "set number of output materials" may be 30, which is the number of pages with the inspection result of "defective product" or may be, for example, 10 as the predetermined number of pages.

In a case where the inspection level of the inspection device 41 is set to be excessively strict, the output material to be considered as "good product" by the inspection device 41 is rarely determined to be "defective product" by the user, and the output material to be considered as "defective product" by the inspection device 41 may be determined to be "good product" by the user.

On the contrary, in a case where the inspection level of the inspection device 41 is set to be excessively loose, the output material to be considered as "defective product" by the inspection device 41 is rarely determined to be "good product" by the user, and the output material to be considered as "good product" by the inspection device 41 may be determined to be "defective product" by the user.

Further, in a case where the inspection level of the inspection device 41 is appropriately set according to the determination criterion of the user, the inspection result of the inspection device 41 substantially matches the determination result of the user.

Therefore, in the inspection result in the same print job, regarding the mismatch between the inspection result by the inspection device 41 and the input result from the user, both the number of pages for which the output material to be considered as "defective product" by the inspection device 41 is determined to be "good product" by the user and the number of pages for which the output material to be considered as "good product" by the inspection device 41 is determined to be "defective product" by the user are not large together.

Therefore, as described above, with the "set condition" of "a ratio of the number of times in which the mismatch occurs in the set number of output materials is equal to or larger than a set ratio" or "the number of times in which the mismatch occurs in the set number of output materials is equal to or larger than the set number of times", the inspection level may be changeable according to the determination criterion of the user while eliminating an error.

In the present exemplary embodiment, as an example, in a case where the number of times in which the mismatch occurs is 5 or more in all the number of pages inspected by the inspection device 41 corresponding to one print job, the "set condition" is a condition that changes the inspection level.

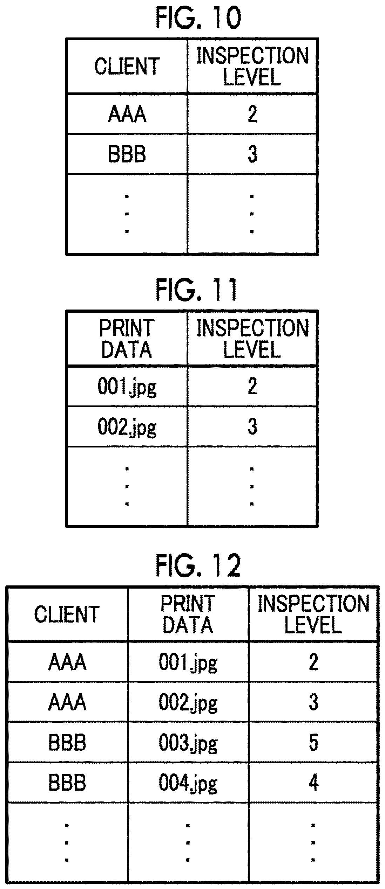

In the management server 10, the inspection level is managed for each individual of the inspection device 41. Further, the inspection level may be set further for each output content (for example, print data) in each individual as shown in Fig. 10, may be set for each requester (for example, client) requesting the output as shown in Fig. 11, or may be set for each requester requesting the output and for each output content as shown in Fig. 12.

Next, a flow of the processing of changing the inspection level of the inspection device 41 in the printing system 1 of the present exemplary embodiment will be described with reference to a flowchart.

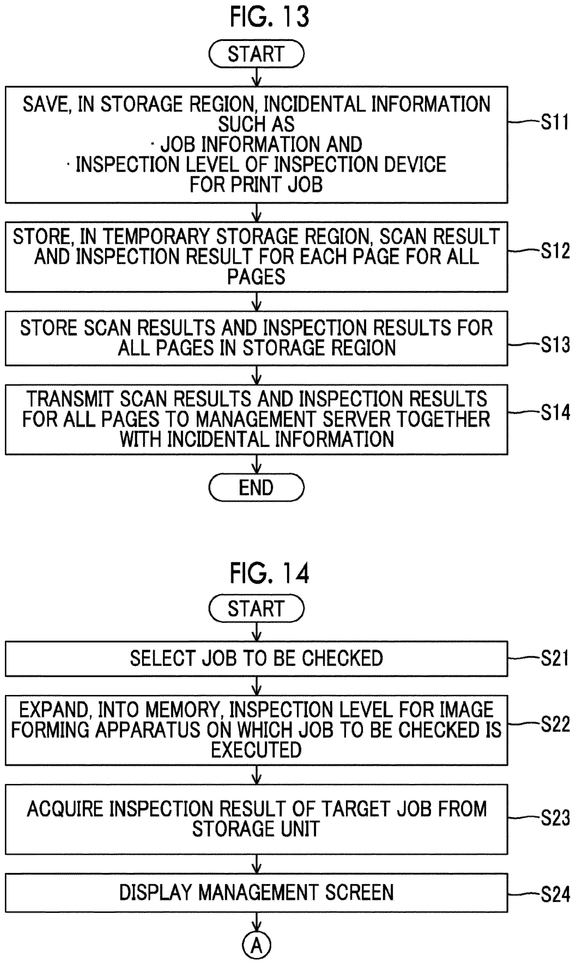

First, processing of acquiring the inspection result in the inspection device 41 will be described with reference to a flowchart of Fig. 13.

First, in step S11, the inspection device 41 saves, in a storage region, incidental information such as "job information" of the print job and "inspection level" currently set for the print job.

Next, in step S12, the inspection device 41 stores, in a temporary storage region, the scan result and the inspection result for each page for all pages of the output material output from the image forming apparatus 40 by the execution of the print job.

In a case where the scan results and the inspection results for all the pages are stored in the temporary storage region, the inspection device 41 shifts the scan results and the inspection results for all the pages from the temporary storage region to the storage region for storage in step S13.

Next, in step S14, the inspection device 41 transmits the scan results and the inspection results for all the pages to the management server 10 together with the incidental information.

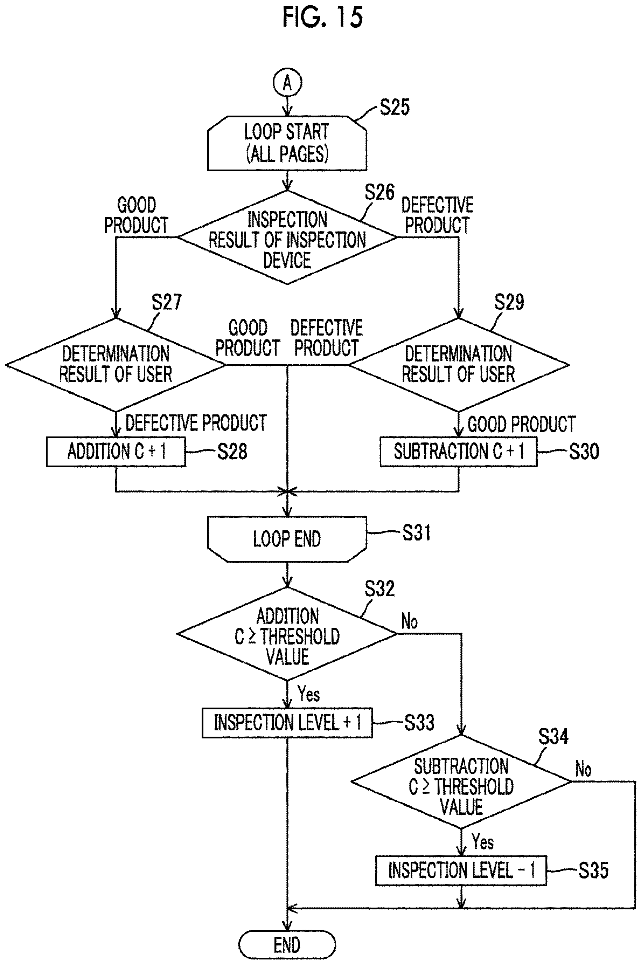

Next, the processing of changing the inspection level of the inspection device 41 by the management server 10 will be described with reference to flowcharts of Figs. 14 and 15. Fig. 14 shows a first half part of the flowchart, and Fig. 15 shows a second half part of the flowchart.

First, in step S21, the control unit 61 of the management server 10 receives selection of a job to be checked from the user.

Next, in step S22, the control unit 61 expands, into the memory 12, the inspection level for the image forming apparatus on which the job to be checked is executed.

Next, the control unit 61 acquires the inspection result of a target job from the storage unit 62 in step S23, and displays the management screen 80 on the display 25 of the user terminal 20 in step S24.

Next, in steps S25 to S31, the control unit 61 receives the input of the determination result for each page from the user for all the pages.

Regarding the processing of each page, specifically, the control unit 61 determines whether the inspection result of the inspection device 41 is "good product" or "defective product" in step S26.

In a case where the inspection result of the inspection device 41 is determined to be "good product" in step S26, the control unit 61 determines whether the determination result input by the user is "good product" or "defective product" in step S27.

In step S27, in a case where the determination result input by the user is determined to be "defective product", the control unit 61 increments an addition counter by +1 in step S28 and transitions to the processing of the next page. The addition counter is a parameter for determining whether or not to raise the inspection level.

In step S27, in a case where the determination result input by the user is determined to be "good product", the control unit 61 transitions to the processing of the next page without change.

In step S26, in a case where the inspection result of the inspection device 41 is determined to be "defective product", the control unit 61 determines whether the determination result input by the user is "good product" or "defective product" in step S29.

In a case where the determination result input by the user is determined to be "good product" in step S29, the control unit 61 increments a subtraction counter by +1 in step S30 and transitions to the processing of the next page. The subtraction counter is a parameter for determining whether or not to lower the inspection level.

In step S29, in a case where the determination result input by the user is determined to be "defective product", the control unit 61 transitions to the processing of the next page without change.

After the processing for all the pages is ended, the control unit 61 determines whether or not a numerical value of the addition counter is equal to or larger than a set threshold value (five times in the present exemplary embodiment) in step S32.

In a case where the numerical value of the addition counter is determined to be equal to or larger than the set threshold value in step S32, the control unit 61 raises the inspection level of the inspection device 41 by one step in step S33 and ends the processing.

In a case where the numerical value of the addition counter is determined to be not equal to or larger than the set threshold value in step S32, the control unit 61 determines whether or not a numerical value of the subtraction counter is equal to or larger than a set threshold value (five times in the present exemplary embodiment) in step S34.

In a case where the numerical value of the subtraction counter is determined to be equal to or larger than the set threshold value in step S34, the control unit 61 lowers the inspection level of the inspection device 41 by one step in step S35 and ends the processing.

In a case where the numerical value of the subtraction counter is determined to be not equal to or larger than the set threshold value in step S34, the control unit 61 ends the processing without change.

### [Modification Example]

While the printing system 1 of the exemplary embodiment of the present invention is described above, the present invention is not limited to the exemplary embodiment and can be appropriately changed.

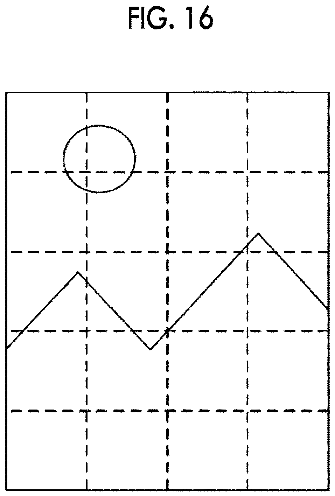

For example, in the above exemplary embodiment, the inspection level is uniformly set for the entire scanned image, but the scanned image may be divided into a plurality of regions, and different inspection levels may be set for respective regions as shown in Fig. 16.

In this case, for example, the inspection level of a central region of the scanned image may be stricter than the inspection level of a peripheral region. Further, the inspection level of a region in which a meaningful subject is shown in the scanned image may be stricter than the inspection level of the other region.

Further, the input of the determination result of the user is not limited to the input of "good product" or "defective product", and may be an input of "agreement" or "disagreement" for the inspection result of the inspection device or an input of "appropriate" or "inappropriate" for the inspection result of the inspection device. That is, any aspect may be employed as long as the determination criterion of the user for the inspection result of the inspection device can be input.

Further, the printing system may be configured by only one set of the operation terminal 30 and the image forming apparatus 40, and the operation terminal 30 may have the function of the management server 10.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Supplementary Notes]

Hereinafter, supplementary notes of aspects of the present disclosure will be described.
(((1))) An inspection level setting system comprising:
   a processor configured to:
   display an inspection result of inspecting whether an output material output from an output apparatus is a good product in an inspection device in which an inspection level serving as a reference for determining whether the output material is the good product is set;
   receive, from a user, an input of a determination result as to whether the output material inspected by the inspection device is the good product; and
   change, in a case where the inspection result by the inspection device does not match the determination result of the user, the inspection level set in the inspection device to be brought close to a determination criterion of the user.
(((2))) The inspection level setting system according to (((1))), wherein the processor is configured to:
   set, in a case where the inspection result by the inspection device is the good product and the input from the user is not the good product, the inspection level to be stricter than a current inspection level; and
   set, in a case where the inspection result by the inspection device is not the good product and the input from the user is the good product, the inspection level to be looser than the current inspection level.
(((3))) The inspection level setting system according to (((2))), wherein the processor is configured to:
   change the inspection level in a case where a mismatch satisfying a set condition occurs, regarding the mismatch between the inspection result by the inspection device and an input result from the user.
(((4))) The inspection level setting system according to (((3))),
   wherein the set condition is that a ratio of the number of times in which the mismatch occurs in the set number of output materials is equal to or larger than a set ratio.
(((5))) The inspection level setting system according to (((3))),
   wherein the set condition is that the number of times in which the mismatch occurs in the set number of output materials is equal to or larger than the set number of times.
(((6))) The inspection level setting system according to any one of (((1))) to (((5))),
   wherein the inspection level is set for each output content.
(((7))) The inspection level setting system according to any one of (((1))) to (((5))),
   wherein the inspection level is set for each requester requesting an output.
(((8))) The inspection level setting system according to (((7))),
   wherein the inspection level is further set for each output content.
(((9))) A program that causes a computer to execute a process comprising:
   displaying an inspection result of inspecting whether an output material output from an output apparatus is a good product in an inspection device in which an inspection level serving as a reference for determining whether the output material is the good product is set;
   receiving, from a user, an input of a determination result as to whether the output material inspected by the inspection device is the good product; and
   changing, in a case where the inspection result by the inspection device does not match the determination result of the user, the inspection level set in the inspection device to be brought close to a determination criterion of the user.

The effects of the configurations of the supplementary notes will be described below.

With the inspection level setting system according to (((1))), the inspection level in which the determination criterion of the user is reflected in the inspection device can be set.

With the inspection level setting system according to (((2))), the inspection level can be brought close to the determination criterion of the user.

With the inspection level setting system according to (((3))), the inspection level can be maintained in a case where the set condition is not satisfied.

With the inspection level setting system according to (((4))), the inspection level can be maintained in a case where the ratio of the number of times in which the mismatch occurs in the set number of output materials is less than the set ratio.

With the inspection level setting system according to (((5))), the inspection level can be maintained in a case where the number of times in which the mismatch occurs in the set number of output materials is less than the set number of times.

With the inspection level setting system according to (((6))), different inspection levels can be set in a case where the output contents are different.

With the inspection level setting system according to (((7))), different inspection levels can be set in a case where requesters requesting the output are different.

With the inspection level setting system according to (((8))), different inspection levels can be set in a case where the output contents are different.

With the program according to (((9))), the inspection level in which the determination criterion of the user is reflected in the inspection device can be set.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printing system
10: management server
11: CPU
12: memory
13: storage device
14: communication interface
15: control bus
20: user terminal
30: operation terminal
40: image forming apparatus
41: inspection device
50: network
61: control unit
62: storage unit
63: data transmission and reception unit
80: management screen
81: job information display unit
82: page information display unit
83: inspection result display unit
84: enlarged image display unit
85: "good product" input button
86: "defective product" input button
87: thumbnail display unit

## Claims

1. An inspection level setting system comprising:
a processor configured to:
display an inspection result of inspecting whether an output material output from an output apparatus is a good product in an inspection device in which an inspection level serving as a reference for determining whether the output material is the good product is set;
receive, from a user, an input of a determination result as to whether the output material inspected by the inspection device is the good product; and
change, in a case where the inspection result by the inspection device does not match the determination result of the user, the inspection level set in the inspection device to be brought close to a determination criterion of the user.

2. The inspection level setting system according to claim 1, wherein the processor is configured to:
set, in a case where the inspection result by the inspection device is the good product and the input from the user is not the good product, the inspection level to be stricter than a current inspection level; and
set, in a case where the inspection result by the inspection device is not the good product and the input from the user is the good product, the inspection level to be looser than the current inspection level.

3. The inspection level setting system according to claim 2, wherein the processor is configured to:
change the inspection level in a case where a mismatch satisfying a set condition occurs, regarding the mismatch between the inspection result by the inspection device and an input result from the user.

4. The inspection level setting system according to claim 3,
wherein the set condition is that a ratio of the number of times in which the mismatch occurs in the set number of output materials is equal to or larger than a set ratio.

5. The inspection level setting system according to claim 3,
wherein the set condition is that the number of times in which the mismatch occurs in the set number of output materials is equal to or larger than the set number of times.

6. The inspection level setting system according to any one of claims 1 to 5,
wherein the inspection level is set for each output content.

7. The inspection level setting system according to any one of claims 1 to 5,
wherein the inspection level is set for each requester requesting an output.

8. The inspection level setting system according to claim 7,
wherein the inspection level is further set for each output content.

9. A program that causes a computer to execute a process comprising:
displaying an inspection result of inspecting whether an output material output from an output apparatus is a good product in an inspection device in which an inspection level serving as a reference for determining whether the output material is the good product is set;
receiving, from a user, an input of a determination result as to whether the output material inspected by the inspection device is the good product; and
changing, in a case where the inspection result by the inspection device does not match the determination result of the user, the inspection level set in the inspection device to be brought close to a determination criterion of the user.

10. An inspection level setting method comprising:
displaying an inspection result of inspecting whether an output material output from an output apparatus is a good product in an inspection device in which an inspection level serving as a reference for determining whether the output material is the good product is set;
receiving, from a user, an input of a determination result as to whether the output material inspected by the inspection device is the good product; and
changing, in a case where the inspection result by the inspection device does not match the determination result of the user, the inspection level set in the inspection device to be brought close to a determination criterion of the user.
